# EUROPÄISCHE PATENTSCHRIFT

(11) **EP 3 108 311 B1**
(45) Veröffentlichungstag und Bekanntmachung des Hinweises auf die Patenterteilung: **17.10.2018**
(21) Anmeldenummer: 15731016.0
(22) Anmeldetag: 17.06.2015
(51) Int. Cl.: G05B 19/4097, G05B 19/408, G05B 19/401, G06T 7/00, B23K 26/38, B23K 37/02, B23K 37/04, B23K 26/03, B23K 26/08, B23K 26/14, B23K 101/18, G06F 17/50

(54) **VERFAHREN, BEARBEITUNGSMASCHINE UND COMPUTERPROGRAMMPRODUKT ZUM BILDBASIERTEN PLATZIEREN VON WERKSTÜCKBEARBEITUNGSVORGÄNGEN**
METHOD, MACHINING UNIT AND COMPUTER PROGRAM PRODUCT FOR THE IMAGE-BASED POSITIONING OF WORKPIECE MACHINING OPERATIONS
PROCÉDÉ, MACHINE D'USINAGE ET PRODUIT DE PROGRAMME D'ORDINATEUR POUR PLACER À PARTIR D'UNE IMAGE DES OPÉRATIONS D'USINAGE DE PIÈCES

(30) Priorität: 11.07.2014 DE 102014213518
(43) Veröffentlichungstag der Anmeldung: 28.12.2016
(73) Patentinhaber: Trumpf Werkzeugmaschinen GmbH + Co. KG, 71254 Ditzingen (DE)
(72) Erfinder: OTTNAD, Jens, 76199 Karlsruhe (DE); KIEFER, Manuel, 74889 Sinsheim (DE)
(74) Vertreter: Kohler Schmid Möbus Patentanwälte
(86) Internationale Anmeldenummer: PCT/EP2015/063565
(87) Internationale Veröffentlichungsnummer: WO 2016/005159

(56) Entgegenhaltungen:
- EP-A1- 2 672 352
- EP-A2- 2 685 333
- WO-A2-2012/129634
- DE-A1-102009 017 795
- JP-A- 2000 304 527
- US-A1- 2005 149 231
- US-A1- 2006 032 348

## Beschreibung

Die Erfindung betrifft ein Verfahren zum Bearbeiten von flachen Werkstücken, insbesondere Blechen, oder von dreidimensionalen Werkstücken an einer Bearbeitungsmaschine, insbesondere Werkzeug- oder Laserschneidmaschine gemäß Oberbegriff von Anspruch 1, eine zum Durchführen des Verfahrens geeignete Bearbeitungsmaschine und ein zugehöriges Computerprogrammprodukt.

Ein derartiges Bearbeitungsverfahren ist beispielsweise durch die EP 2 685 333 A2 bekannt geworden.

Das manuelle Platzieren oder nachträgliche Positionieren (Neupositionieren) von auszuführenden Werkstückbearbeitungsvorgängen ist in vielen Fällen zeitaufwendig, ungenau und fehleranfällig. Zuerst muss die Bauteildimension ermittelt werden, anschließend wird das Rohmaterial manuell vermessen, und schließlich muss der Startpunkt z.B. mit Hilfe der Laserdiode festgelegt werden. Da diese Informationen häufig nicht ausreichen, wird oftmals zunächst ein Trockenlauf durchgeführt, um Fehlproduktion oder Beschädigung an der Bearbeitungsmaschine zu vermeiden.

Aus JP 11-320143 ist es bekannt, ein zu bearbeitendes Blech mit Hilfe einer Kamera zweidimensional zu scannen und zusammen mit zu schneidenden Werkstückteilen auf einem Bildschirm anzuzeigen sowie einen freien Blechbereich automatisch mit weiteren zu schneidenden Werkstückteilen zu belegen. Dieses Verfahren setzt allerdings voraus, dass der freie Blechbereich von einer Bildverarbeitung korrekt erkannt wird, da andernfalls einige bspw. verschmutzte Blechbereiche von der Bildverarbeitung als bereits bearbeitet erkannt und daher nicht mehr zum Verschachteln weiterer Teile zur Verfügung gestellt werden.

Aus der eingangs genannten EP 2 685 333 A2 ist ein Verfahren zur Steuerung eines Werkzeuges bekannt, bei dem eine Referenzmatrix aus Bezugspunkten und drei Zentrierpunkten in einer Werkstoffbearbeitungsebene bereitgestellt wird. Das Abbild der Werkstoffbearbeitungsebene wird mit Hilfe einer Kamera als Kamerabild in der Größe des Kamerabildfeldes angefertigt. Das Kamerabild der Werkstoffbearbeitungsebene wird durch Abgleich mit der Referenzmatrix entzerrt, die Pixelgröße des Kamerabildes wird durch Abgleich mit der Referenzmatrix skaliert, das Kamerabild wird durch Abgleich mit den Zentrierpunkten zentriert, und eine Bearbeitungskontur wird auf das entzerrte und skalierte Kamerabild des Werkstückes projiziert. Nach dem Ausrichten der Bearbeitungskontur auf dem Kamerabild des Werkstückes wird die Bearbeitung des Werkstückes gestartet, wobei die Bearbeitung des Werkstückes durch das Werkzeug entlang der Bearbeitungskontur erfolgt.

Es ist die Aufgabe der Erfindung, bei einem Verfahren zum Bearbeiten von Werkstücken das manuelle Platzieren oder Neupositionieren eines auszuführenden Werkstückbearbeitungsvorgangs zu vereinfachen und eine zugehörige Bearbeitungsmaschine und ein zugehöriges Computerprogrammprodukt bereitzustellen.

Diese Aufgabe wird erfindungsgemäß durch ein Verfahren zum Bearbeiten von flachen Werkstücken, insbesondere Blechen, oder von dreidimensionalen Werkstücken an einer Bearbeitungsmaschine, insbesondere Werkzeug- oder Laserschneidmaschine, mit den Merkmalen von Anspruch 1 gelöst.

Erfindungsgemäß wird ein auszuführender geplanter Werkstückbearbeitungsvorgang (z.B. ein durchzuführender Laserschnitt) dem Livebild des Werkstücks als Ergebnisvorschau überlagert, also genau dort angezeigt, wo der Werkstückbearbeitungsvorgang, z.B. eine Schneidkontur, abgearbeitet werden würde. Für den Bediener ist somit sofort ersichtlich, ob eine fehlerfreie Produktion bei guter Materialausnutzung möglich ist. Der Bediener kann erforderlichenfalls die abzuarbeitende Kontur im Livebild manuell neupositionieren oder mit anderen Konturen verschachteln. Anschließend wird der neupositionierte Werkstückbearbeitungsvorgang zurück in das Maschinenkoordinatensystem transformiert und entsprechend abgearbeitet. Für die Anzeige des im Maschinenkoordinatensystem geplanten Werkstückbearbeitungsvorgangs im Livebild einerseits und für die Ausführen des im Livebildkoordinatensystem neupositionierten Werkstückbearbeitungsvorgang im Maschinenkoordinatensystem andererseits müssen die Vorwärts- und Rückwärtstransformationen zwischen dem Maschinenkoordinatensystem und dem Livebildkoordinatensystem bekannt sein. Hierfür muss das zweidimensionale Livebild der Bilderfassungsvorrichtung (z.B. eine Kamera mit zwei- oder dreidimensionaler Perspektive mit Blick auf das zu bearbeitende Werkstück) zum dreidimensionalen Maschinenkoordinatensystem kalibriert sein. Eine solche Kalibration kann, aber muss nicht für jedes neue Werkstück zuvor durchgeführt werden.

Das erfindungsgemäße Verfahren bietet außerdem folgende weitere Vorteile:
- Intuitive Bedienung: Der Blickwinkel im Livebild entspricht dem gewohnten Blick in die Maschine. Alle Transformationen, Umrechnungen und Neupositionierungen werden nun automatisch im Hintergrund gelöst und graphisch dargestellt.
- Vereinfachte und intuitive Bedienung durch direkte Zuweisung des auszuführenden Bearbeitungsvorgangs im Livebild (WYSIWYG, engl. "What you see is what you get") führt zu Zeitersparnis im Vergleich zur manuellen Bearbeitung von Werkstückoberflächen.
- Vorschau des Bearbeitungsergebnisses als überlagerte Darstellung im Livebild und einfache Optimierung, z.B. durch Verschiebung/Drehung/Spiegelung eines Werkstückteils, direkt auf der Bearbeitungsebene.
- Fehlervermeidung durch Ergebnisvorschau und starke Vereinfachung der Bedienung.
- Materialeffizienz, da Werkstückoberfläche ohne Sicherheitsreserven verwendet werden kann.
- Robuste Lösung, da Platzierung unabhängig von ungünstigen Belichtungsverhältnissen, reflektierenden Oberflächen oder sonstigen Einflüssen bei der Bildaufnahme, die z.B. Lösungen mit Bildverarbeitung erschweren.
- Optimierte Bearbeitung, da es möglich ist, eine gewünschte Ausrichtung der zu platzierenden Bearbeitung z.B. gemäß Faserrichtung (CFK-Materialien) oder Oberflächentexturen (Folien, Textil-Stoff) vorzunehmen, da diese Informationen im Livebild vorhanden sind.

Bevorzugt wird vor dem Verfahrensschritt a) mit der Bilderfassungsvorrichtung ein Referenz-Livebild mit mindestens drei Maschinenbezugspunkten erfasst, deren dreidimensionale Lage im Maschinenkoordinatensystem jeweils bekannt ist, und dann werden die Vorwärts- und Rückwärtstransformationen zwischen dem dreidimensionalen Maschinenkoordinatensystem und dem zweidimensionalen Livebildkoordinatensystem anhand der Maschinenbezugspunkte und ihrer im Referenz-Livebild zugehörigen Referenzbildpunkte bestimmt. Durch Kalibrierung von mindestens drei Livebildkoordinaten (Referenzbildpunkten) zu bekannten Maschinenbezugspunkten kann eine Bearbeitungskontur (z.B. ein durchzuführender Laserschnitt) überlagernd im Livebild genau dort dargestellt werden, wo die Kontur abgearbeitet werden würde. Dadurch werden Bezugspunkte im Maschinenarbeitsraum Referenzbildpunkten eindeutig im Livebild zugeordnet und somit die Kamera kalibriert.

Besonders bevorzugt wird mindestens ein vierter Maschinenbezugspunkt, dessen dreidimensionale Lage im Maschinenkoordinatensystem bekannt ist, erfasst oder ein Verzerrungsfaktor, insbesondere zur Korrektur optischer Verzerrungen durch die Bilderfassungsvorrichtung, bestimmt, wobei die Vorwärts- und Rückwärtstransformationen zwischen dem dreidimensionalen Maschinenkoordinatensystem und dem zweidimensionalen Livebildkoordinatensystem anhand der mindestens vier Maschinenbezugspunkte oder anhand der mindestens drei Maschinenbezugspunkte und dem Verzerrungsfaktor, sowie anhand der im Referenz-Livebild zugehörigen Referenzbildpunkte bestimmt werden. Der Verzerrungsfaktor kann bspw. indirekt durch Aufnahme eines vorbestimmten Musters mit der Kamera und Bildanalyse bestimmt werden oder direkt über eine Shack-Hartmann-Anordnung gemessen und durch Superposition von Zernike-Polynomen beschrieben werden. Hierdurch werden die Vorwärts- und Rückwärtstransformationen zwischen dem Maschinenkoordinatensystem und dem Livebildkoordinatensystem wesentlich präziser bestimmt, so dass beim manuellen Neupositionieren des auszuführenden Werkstückbearbeitungsvorgangs im Livebild weniger Sicherheitsabstand zu bspw. Werkstückkanten oder anderen Werkstückbearbeitungen eingehalten zu werden braucht.

In einer Variante werden zumindest einige, insbesondere alle, den Maschinenbezugspunkten im Referenz-Livebild entsprechenden Referenzbildpunkte vom Bediener manuell zugeordnet, beispielsweise indem der Bediener die Referenzbildpunkte im Referenz-Livebild auf der Bedienoberfläche durch Anklicken auswählt. In einer anderen Variante werden zumindest einige, insbesondere alle, den Maschinenbezugspunkten im Referenz-Livebild entsprechenden Referenzbildpunkte durch eine automatische Bilderkennung von markanten Maschinenbezugspunkten zugeordnet. Vorteilhaft kann einer der Maschinenbezugspunkte durch eine verfahrbare Maschinenkomponente (z.B. durch den Laserbearbeitungskopf einer Laserbearbeitungsmaschine) gebildet sein, die vor dem Erfassen des mindestens einen Referenz-Livebildes an eine im Maschinenkoordinatensystem bekannte Lage verfahren worden ist. Alternativ können durch Bearbeitungsvorgänge in einem Werkstück Maschinenbezugspunkte hinzugefügt werden, bspw. durch Markierungen oder Ausschneiden von Lochkreisen. Es ist auch möglich, die Konturen von geschnittenen Werkstückteilen einer vorangegangenen Bearbeitung als Maschinenbezugspunkte zu verwenden. Darüber hinaus können durch Projektion eines Punktes oder einer Geometrie auf die eine oder mehrere Stellen der Bezugsebene, beispielsweise mit einer oder mehreren (verfahrbaren) Laserdioden, ein oder mehrere Maschinenbezugspunkte erzeugt werden. Dadurch bildet die (der Bilderfassungsvorrichtung zugewandte) Oberfläche des Werkstücks die Bezugsebene.

Vorzugsweise umfasst in Verfahrensschritt c) das manuelle Neupositionieren mindestens eine der folgenden Operationen: Drehen eines zu schneidenden Werkstückteils, Verschieben eines zu schneidenden Werkstückteils, Ausrichten (Schachteln) von zu schneidenden Werkstückteilen, Drehen und/oder Verschieben und/oder Höheneinstellen eines Anhebe- oder Ausschiebeelements (z.B. Sauger, Magnet-, Elektroadhäsions- oder Zangengreifer, oder Ausdrückstift), Positionieren eines Trennschnitts oder von Teachpunkten für sonstige manuelle Bearbeitungs- oder Rüstvorgänge.

Besonders bevorzugt wird vor dem Verfahrensschritt b) die Werkstückdicke erfasst, um im Verfahrensschritt b) den geplanten Werkstückbearbeitungsvorgang im Livebild des Werkstücks nicht in der Auflageebene (Unterseite) des Werkstücks anzuzeigen, sondern auf der der Bilderfassungsvorrichtung zugewandten Oberseite (Bearbeitungsebene) des Werkstücks. Dadurch können Werkstückbearbeitungsvorgänge statt in der Auflageebene in der tatsächlichen Bearbeitungsebene im Livebild platziert werden, was insbesondere bei dicken Blechen relevant ist.

Um einen Werkstückbearbeitungsvorgang im Livebild so darzustellen, dass er korrekt auf der Oberfläche eines dreidimensionalen Werkstücks angezeigt (und später ausgeführt) wird, ist es notwendig, dass die für ein flaches Werkstück bekannte Vorwärtstransformation, die eine Werkstückbearbeitung in der Auflageebene/Werkstückebene eines flachen Werkstücks anzeigt, an die dreidimensionale Werkstückoberfläche angepasst wird. Vorzugsweise werden dazu aus den für Werkstückbearbeitungsvorgänge an flachen Werkstücken bekannten Vorwärts- und Rückwärtstransformationen die Vorwärts- und Rückwärtstransformationen für Werkstückbearbeitungsvorgänge an einem dreidimensionalen Werkstück wie folgt bestimmt:
(i) Anzeigen einer CAD-Darstellung, insbesondere zumindest einer Teil-CAD-Darstellung des Werkstücks, im Livebild des Werkstücks durch die für flache Werkstücke bekannte Vorwärtstransformation der CAD-Darstellung von dem dreidimensionalen CAD-Koordinatensystem in das zweidimensionale Livebildkoordinatensystem, wobei die im Livebild angezeigte CAD-Darstellung abhängig von ihrer Position im Livebild unterschiedlich skaliert ist; und
ii) Anpassen der für flache Werkstücke bekannten Vorwärts- und Rückwärtstransformationen an das dreidimensionale Werkstück durch Verschieben der positionsabhängigen CAD-Darstellung des Werkstücks im Livebild des Werkstücks, bis im Livebild die CAD-Darstellung das Werkstück zumindest teilweise, insbesondere vollständig, deckungsgleich überlagert.

Eine CAD-Darstellung umfasst zumindest eine einzelne Linie, die in mindestens einem definierten Punkt mit einem bekannten Punkt der Bezugsebene und mindestens einem weiteren definierten Punkt des Werkstücks überlagert wird.

Alternativ wird eine Teil-CAD-Darstellung des Werkstücks auf der Auflageebene im Livebild angezeigt und dann von einem Bediener manuell (oder automatisiert von einer anderen Bilderkennung) im Livebild verschoben, bis sie deckungsgleich mit dem tatsächlichen Werkstück im Livebild ist. Die Teil-CAD-Darstellung kann beispielsweise nur die Unterseite des Werkstücks sein, oder aber im Livebild des Werkstücks wird die vollständige CAD-Darstellung des Werkstücks angezeigt. Dadurch ist es einfach möglich, die Positionierung des Werkstücks im Maschinenkoordinatensystem zu ermitteln.

Die Erfindung betrifft in einem weiteren Aspekt auch eine Bearbeitungsmaschine, insbesondere Werkzeug- oder Laserschneidmaschine, zur Bearbeitung von flachen Werkstücken, insbesondere Blechen, oder von dreidimensionalen Werkstücken mit den Merkmalen von Anspruch 11.

Die Erfindung betrifft schließlich auch ein Computerprogrammprodukt, welches Codemittel aufweist, die zum Durchführen aller Schritte des erfindungsgemäßen Bearbeitungsverfahrens angepasst sind, wenn das Programm auf einer Maschinensteuerung einer Bearbeitungsmaschine abläuft.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine zum Durchführen des erfindungsgemäßen Bearbeitungsverfahrens geeignete Laserschneidmaschine beim bildbasierten Platzieren von Werkstückbearbeitungsvorgängen in einem Livebild des Werkstücks;
- Fig. 2: die Laserschneidmaschine der Fig. 1 beim Kalibrieren eines Livebildkoordinatensystems;
- Fig. 3: das Herausdrücken eines verkanteten Werkstückteils durch einen Ausdrückstift der Laserschneidmaschine; und
- Fign. 4a-4e: ein Livebild eines dreidimensionalen Werkstücks mit eingeblendeter CAD-Darstellung des dreidimensionalen Werkstücks, wobei die CAD-Darstellung an verschiedenen Positionen des Livebildes eingeblendet ist.

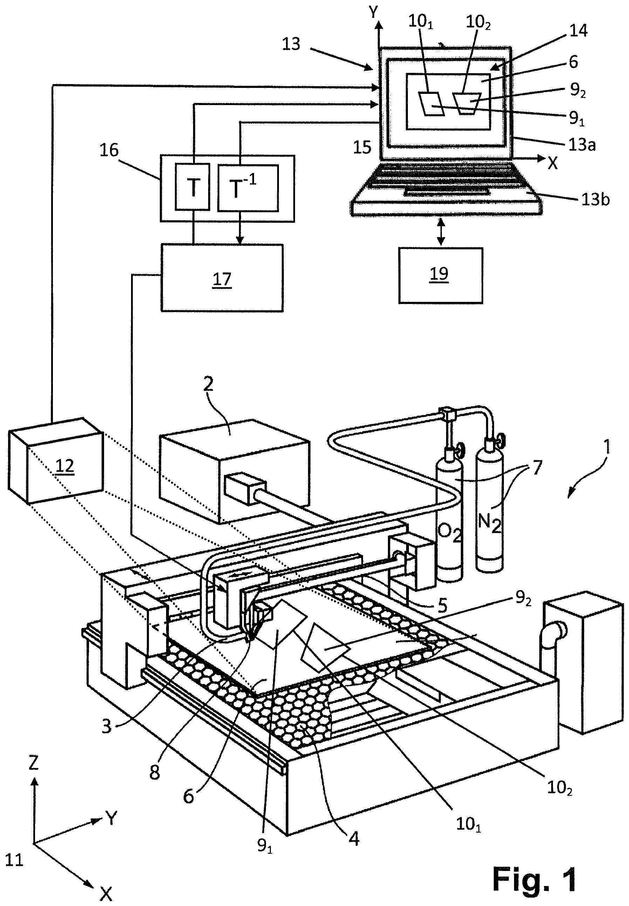

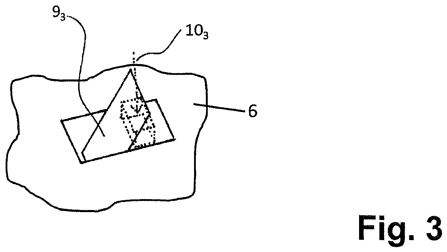

Die in **Fig. 1** perspektivisch als Flachbettmaschine dargestellte Laserschneidmaschine **1** umfasst einen z.B. als CO₂-Laser, Diodenlaser oder Festkörperlaser ausgeführten Laserstrahlerzeuger **2**, einen in X- und Y-Richtung verfahrbaren Laserbearbeitungskopf **3** und eine Werkstückauflage **4**. Im Laserstrahlerzeuger 2 wird ein Laserstrahl **5** erzeugt, der mittels eines (nicht gezeigten) Lichtleitkabels oder (nicht gezeigter) Umlenkspiegel vom Laserstrahlerzeuger 2 zum Laserbearbeitungskopf 3 geführt wird. Der Laserstrahl 5 wird mittels einer im Laserbearbeitungskopf 3 angeordneten Fokussieroptik auf ein Werkstück (z.B. ein Blech) **6** gerichtet, das auf der Werkstückauflage 4 aufliegt. Die Laserschneidmaschine 1 wird darüber hinaus mit Prozessgasen **7**, beispielsweise Sauerstoff und Stickstoff, versorgt. Das Prozessgas 7 wird einer Prozessgasdüse **8** des Laserbearbeitungskopfes 3 zugeführt, aus der es zusammen mit dem Laserstrahl 5 austritt. Die Laserschneidmaschine 1 dient zum Laserschneiden von Werkstückteilen **9₁**, **9₂** aus dem Werkstück 6, wobei die hierfür erforderlichen Werkstückbearbeitungsvorgänge (Schnittkonturen) mit **10₁**, **10₂** dargestellt sind. Das dreidimensionale Maschinenkoordinatensystem XYZ ist insgesamt mit **11** bezeichnet. Der Laserbearbeitungskopf, oder ein Teil davon, kann als Ausdrückstift fungieren, der ein geschnittenes, aber wegen einer Verkantung nicht gefallenes Werkstückteil **9₃** zum Entladen an einer passenden Stelle nach unten drückt, wie in **Fig. 3** gezeigt ist. Der zugehörige Werkstückbearbeitungsvorgang, also das Herausdrücken des Werkstückteils 9₃ durch den Ausdrückstift, ist mit **10₃** bezeichnet.

Die Laserschneidmaschine 1 umfasst weiterhin eine maschinenseitig ortsbekannt, hier ortsfest angeordnete Bilderfassungsvorrichtung **12** in Form einer Kamera zum zweidimensionalen Erfassen eines Bildes der Werkstückauflage 4 bzw. des darauf aufliegenden Werkstücks 6. Der Sichtbereich der Bilderfassungsvorrichtung 12 ist mit gepunkteten Linien dargestellt. Das aufgenommene Bild wird auf einer Anzeige **13a** einer Bedienoberfläche **13** der Maschine 1 als Livebild **14** des Werkstücks 6 angezeigt. Das zweidimensionale Livebildkoordinatensystem XY der Anzeige 13a ist insgesamt mit **15** bezeichnet. Die Laserschneidmaschine 1 umfasst schließlich auch noch eine Transformationseinheit **16** zum Vorwärts- und Rückwärtstransformieren **T**, **T⁻¹** zwischen dem dreidimensionalen Maschinenkoordinatensystem 11 und dem zweidimensionalen Livebildkoordinatensystem 15, sowie eine Maschinensteuerung **17**.

Im Folgenden wird das erfindungsgemäße Verfahren zum bildbasierten Neupositionieren (Platzieren) eines auszuführenden Werkstückbearbeitungsvorgangs 10₁, 10₂, 10₃ beschrieben.

Zuerst wird mit der Bilderfassungsvorrichtung 12 (aus 2D- oder 3D-Perspektive) ein Bild des zu bearbeitenden Werkstücks 6 aufgenommen und in der Anzeige 13a als zweidimensionales Livebild 14 des Werkstücks 6 angezeigt. Ein auszuführender Werkstückbearbeitungsvorgang 10₁, 10₂, 10₃, der im dreidimensionalen Maschinenkoordinatensystem 11 beispielsweise als ausführbares Maschinenprogramm (NC-Programm) vorliegt, wird in der Transformationseinheit 16 durch eine vorbestimmte Vorwärtstransformation T vom dreidimensionalen Maschinenkoordinatensystem 11 in das zweidimensionale Livebildkoordinatensystem 15 transformiert und ebenfalls in der Anzeige 13a - dem Livebild 14 des Werkstücks 6 überlagert - angezeigt. Der gewünschte Werkstückbearbeitungsvorgang 10₁, 10₂ wird also als Ergebnisvorschau im Livebild 14 des Werkstücks 6 eingeblendet, so dass sofort ersichtlich ist, ob eine fehlerfreie Produktion bei guter Materialausnutzung möglich ist. Erforderlichenfalls kann der angezeigte Werkstückbearbeitungsvorgang 10₁, 10₂, 10₃ nun vom Bediener mittels einer Eingabeeinrichtung (Tastatur, Maus) **13b** der Bedienoberfläche 13 direkt im Livebild 14 des Werkstücks 6 neupositioniert werden. Bei dem manuellen Neupositionieren kann es sich beispielsweise um das Drehen oder Verschieben eines zu schneidenden Werkstückteils 9₁, 9₂ bzw. seiner Schnittkontur, das Ausrichten (Schachteln) von mehreren zu schneidenden Werkstückteilen 9₁, 9₂, oder das Drehen und/oder Verschieben und/oder Höheneinstellen eines Anhebe- oder Ausschiebeelements (z.B. Sauger, Magnet-, Elektroadhäsions- oder Zangengreifer, oder Ausdrückstift), oder das Positionieren eines Trennschnitts oder von Teachpunkten für sonstige manuelle Bearbeitungs- oder Rüstvorgänge handeln. Abschließend wird der im Livebild 14 neupositionierte Werkstückbearbeitungsvorgang 10₁, 10₂, 10₃ in der Transformationseinheit 16 durch eine vorbestimmte Rückwärtstransformation T⁻¹ vom zweidimensionalen Livebildkoordinatensystem 15 zurück in das dreidimensionale Maschinenkoordinatensystem 11 transformiert und nach Erstellen eines zugehörigen NC-Programms dann am Werkstück 6 ausgeführt. Die Maschinensteuerung 17 ist programmiert, die Werkstückbearbeitung gemäß diesem Verfahren zu steuern.

Vor dem überlagerten Anzeigen von Werkstück 6 und Werkstückbearbeitungsvorgang 10₁, 10₂, 10₃ in der Anzeige 13a kann die Werkstückdicke durch Vermessung oder manuelle Eingabe erfasst werden, um den geplanten Werkstückbearbeitungsvorgang 10₁, 10₂, 10₃ im Livebild 14 des Werkstücks 6 nicht in der Auflageebene (Unterseite) des Werkstücks 6 anzuzeigen, sondern auf der der Bilderfassungsvorrichtung 12 zugewandten Oberseite (Bearbeitungsebene) des Werkstücks 6. Dadurch können Werkstückbearbeitungsvorgänge 10₁, 10₂, 10₃ statt in der Auflageebene in der tatsächlichen Bearbeitungsebene im Livebild 14 platziert werden, was insbesondere bei dicken Blechen relevant ist. Alternativ können die Maschinenbezugspunkte P1-P4 direkt auf der Oberfläche des Werkstücks 6 angeordnet sein, bspw. durch Hinzufügen von Maschinenbezugspunkten P1-P4 durch Bearbeitungsvorgänge in einem Werkstück 6, bspw. durch Markierungen oder Ausschneiden von Lochkreisen. Es ist auch möglich, die Konturen von zuvor geschnittenen Werkstückteilen einer vorangegangenen Bearbeitung als Maschinenbezugspunkte P1-P4 zu verwenden. Darüber hinaus können durch Projektion eines Punktes oder einer Geometrie auf eine oder mehrere Stellen der Oberfläche des Werkstücks 6, beispielsweise mit einer oder mehreren (verfahrbaren) Laserdioden, ein oder mehrere Maschinenbezugspunkte erzeugt werden. Dadurch bildet die (der Bilderfassungsvorrichtung 12 zugewandte) Oberfläche des Werkstücks 6 die Bezugsebene.

Voraussetzung für das beschriebene Verfahren zum bildbasierten Neupositionieren von Werkstückbearbeitungsvorgängen 10₁, 10₂, 10₃ ist die Bestimmung der Vorwärts- und Rückwärtstransformation T, T⁻¹ zur Kalibration der Bilderfassungsvorrichtung 12 mit Blick auf das Werkstück 6, um Raumpunkten im Maschinenkoordinatensystem 11 (Maschinenarbeitsraum) eindeutige Bildpunkte im Livebildkoordinatensystem 15 bzw. im Livebild 14 zuzuordnen.

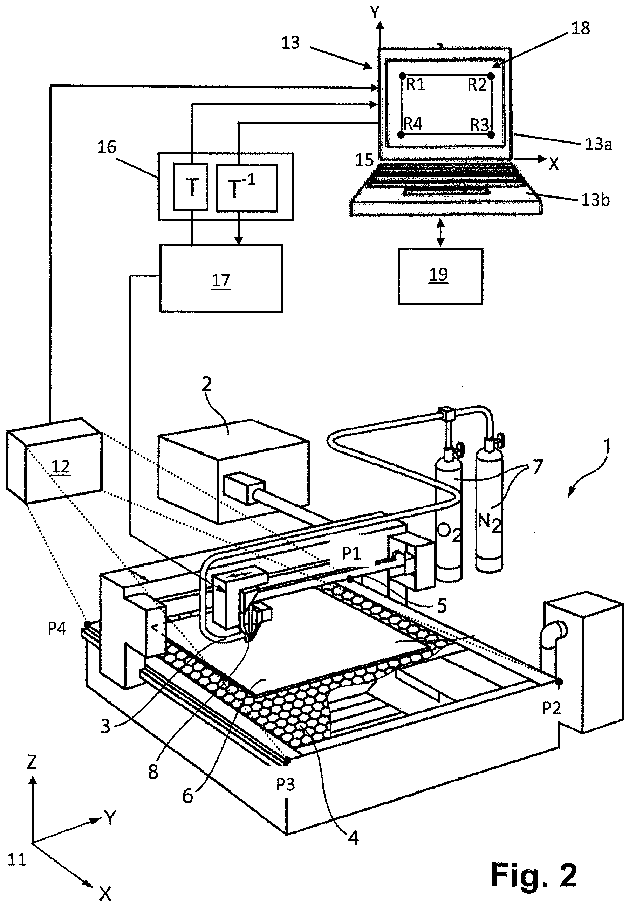

In **Fig. 2** ist beispielhaft gezeigt, wie die Bilderfassungsvorrichtung 12 zuvor kalibriert werden kann.
Zuerst wird mit der Bilderfassungsvorrichtung 12 ein Referenzbild mit mindestens drei (hier vier) Maschinenbezugspunkten **P1-P4** erfasst, deren dreidimensionale Lage im Maschinenkoordinatensystem 11 jeweils bekannt ist, und als Referenz-Livebild **18** in der Anzeige 13a angezeigt. Anhand der Maschinenbezugspunkte P1-P4 und ihrer zugehörigen Referenzbildpunkte **R1-R4** im Referenz-Livebild 18 können die Vorwärts- und Rückwärtstransformationen T, T⁻¹ zwischen dem dreidimensionalen Maschinenkoordinatensystem 11 und dem zweidimensionalen Livebildkoordinatensystem 15 bestimmt werden. Die den Maschinenbezugspunkten P1-P4 im Referenz-Livebild 18 entsprechenden Referenzbildpunkte R1-R4 können beispielsweise vom Bediener manuell oder durch eine automatische Bilderkennung **19** zugeordnet werden. Auch der verfahrbare Laserbearbeitungskopf 3 kann einen der Maschinenbezugspunkte P1-P4 bilden, wenn er vor dem Erfassen des Referenz-Livebildes 18 an eine im Maschinenkoordinatensystem 11 bekannte Position verfahren worden ist.

Statt der gezeigten einen Bilderfassungsvorrichtung 12 können auch mehrere Bilderfassungsvorrichtungen 12 mit überlappenden oder jeweils benachbarten Sichtbereichen verwendet werden. Es können aber auch eine oder mehrere bewegbare Bilderfassungsvorrichtungen 12 vorgesehen sein, bspw. durch Anordnung der Bilderfassungsvorrichtungen 12 an einer Bearbeitungseinheit, wie z.B. dem Laserkopf 3, oder durch eine davon separat verfahrbare Bewegungsachse.

Die aus drei bis vier Maschinenbezugspunkten gewonnene Vorwärtstransformation T reicht aus, um ein auf Basis einer gewünschten Bezugsebene (Auflageebene) zwei- und dreidimensionale Darstellungen in das zweidimensionale Livebild 14 zu projizieren. Allerdings ist die im Livebild 14 projizierte Darstellung je nachdem, an welcher Position diese Darstellung im Livebild 14 angezeigt wird, unterschiedlich skaliert. Um die projizierte Darstellung an der korrekten Position im Livebild 14 anzuzeigen, muss daher zuvor die Vorwärtstransformation T entsprechend skaliert werden. Zur Ermittlung des zugehörigen Skalierungsfaktors kann eine CAD-Darstellung des dreidimensionalen Werkstücks auf der Auflageebene im Livebild 14 angezeigt werden, und der Bediener (oder eine andere Bilderkennung) verschiebt dann die CAD-Darstellung, bis sie im Livebild 14 deckungsgleich mit dem angezeigten Bild des Werkstücks ist.

Allgemeiner kann eine CAD-Darstellung zumindest eine einzelne Linie umfassen, die in mindestens einem definierten Punkt mit einem bekannten Punkt der Bezugsebene und mindestens einem weiteren definierten Punkt des Werkstücks überlagert wird. So ist es bspw. für den Bediener möglich, im Livebild eine Ecke einer hochstehenden Kante eines verkippten Werkstücks 6 mit einem definierten Punkt einer im Maschinenkoordinatensystem senkrecht verlaufenden Linie zu überlagern und einen Punkt in der Bezugsebene, der sich senkrecht unter der Ecke befindet, mit dem weiteren definierten Punkt zu überlagern. Die Länge der Linie zwischen den beiden definierten Punkt legt auf Grund der bekannten Skalierungsfaktoren und Orientierung der Linie eine Strecke fest, wodurch in diesem Fall die Höhe der hochstehenden Ecke ermittelt werden kann. Diese Höhe kann verwendet werden, um bspw. das verkippte Werkstück 6 mit einem Werkzeug aus einem Restgitter auszustoßen oder sicherzustellen, dass keine Kollisionsrisiken mit dem Werkzeug (z.B. Laserkopf) vorliegen. Diese Funktion stellt somit eine Art Maßband dar, mit dem im Livebild Abmessungen ermittelt werden können, um Werkstückbearbeitungsvorgänge genauer oder zuverlässiger durchzuführen.

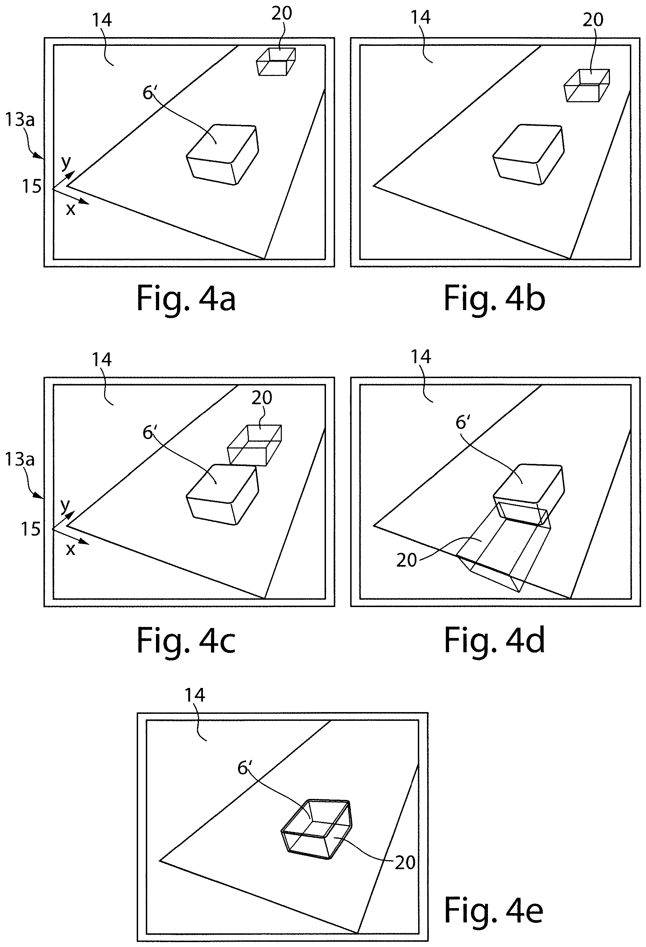

In **Fign. 4a bis 4e** ist beispielhaft gezeigt, wie aus den für Werkstückbearbeitungsvorgänge an flachen Werkstücken 6 bekannten Vorwärts- und Rückwärtstransformationen T, T⁻¹ die skalierten Vorwärts- und Rückwärtstransformationen **T', T'⁻¹** für Werkstückbearbeitungsvorgänge an einem dreidimensionalen Werkstück **6'** bestimmt werden können.
Das mit der Bilderfassungsvorrichtung 12 aufgenommene Bild des dreidimensionales Werkstücks 6', hier beispielhaft eines Quaders, wird auf der Anzeige 13a der Bedienoberfläche 13 als Livebild 14 angezeigt. In diesem Livebild 14 des Werkstücks 6' wird eine CAD-Darstellung **20** des dreidimensionalen Werkstücks 6' durch die für flache Werkstücke 6 bekannte Vorwärtstransformation T der CAD-Darstellung 20 von dem dreidimensionalen CAD-Koordinatensystem in das zweidimensionale Livebildkoordinatensystem 15 angezeigt. Die im Livebild 14 angezeigte CAD-Darstellung 20 ist je nachdem, an welcher Position die CAD-Darstellung 20 im Livebild 14 angezeigt wird, unterschiedlich skaliert.
Die angezeigte CAD-Darstellung 20 des Werkstücks 6' wird manuell vom Benutzer oder automatisiert im Livebild 14 des Werkstücks 6 verschoben (Fign. 4a-4e) und dadurch die zugrundeliegende Vorwärtstransformation verändert. Mit der jeweiligen Verschiebeposition ändert sich auch die Größe der angezeigten CAD-Darstellung 20. Wenn im Livebild 14 die verschobene CAD-Darstellung 20 das angezeigte Bild des Werkstücks 6' deckungsgleich überlagert (Fig. 4e), ist die gesuchte Vorwärtstransformationen **T'** für das dreidimensionale Werkstück 6' gefunden. Hieraus kann dann auch die Rückwärtstransformation **T'⁻¹** für das dreidimensionale Werkstück 6' ermittelt werden.

Das manuelle oder automatisierte Verschieben der CAD-Darstellung 20 des dreidimensionalen Werkstücks 6' im Livebild 14 des Werkstücks 6' kann beispielsweise über die Bedieneinheit 13b erfolgen.

Statt wie in Fig. 4 das dreidimensionale Werkstück 6' als vollständige CAD-Darstellung 20 im Livebild 14 anzuzeigen, kann auch nur ein Teil, bspw. die Unterseite des Werkstücks 6', als Teil-CAD-Darstellung 20 im Livebild 14 angezeigt und verschoben werden, bis im Livebild 14 die verschobene CAD-Darstellung 20 die Unterseite des angezeigten Werkstücks 6' deckungsgleich überlagert.

Mit Hilfe der so ermittelten Vorwärtstransformation T' ist es möglich, einen auszuführenden Werkstückbearbeitungsvorgang 10₁, 10₂, 10₃, der im dreidimensionalen Maschinenkoordinatensystem 11 beispielsweise als ausführbares Maschinenprogramm (NC-Programm) vorliegt, in der Transformationseinheit 16 durch die Vorwärtstransformation T' vom dreidimensionalen Maschinenkoordinatensystem 11 in das zweidimensionale Livebildkoordinatensystem 15 zu transformieren und ebenfalls in der Anzeige 13a - dem Livebild 14 des Werkstücks 6' überlagert - anzuzeigen. Der gewünschte Werkstückbearbeitungsvorgang 10₁, 10₂ wird also als Ergebnisvorschau im Livebild 14 des Werkstücks 6' eingeblendet, so dass sofort ersichtlich ist, ob eine fehlerfreie Produktion bei guter Materialausnutzung möglich ist. So können die gleichen Verfahrensschritte, die in der Beschreibung zu im Wesentlichen flachen Werkstücken 6 aufgeführt sind, durchgeführt werden.

## Patentansprüche

1. Verfahren zum Bearbeiten von flachen Werkstücken (6), insbesondere Blechen, oder von dreidimensionalen Werkstücken (6') an einer Bearbeitungsmaschine (1), insbesondere Werkzeug- oder Laserschneidmaschine, mit folgenden Verfahrensschritten:
a) Erfassen eines Livebildes (14) eines zu bearbeitenden Werkstücks (6; 6') aus einer dreidimensionalen Perspektive mit einer Bilderfassungsvorrichtung (12) zum Erfassen zweidimensionaler Bilder und Anzeigen dieses erfassten Livebildes;
b) Anzeigen mindestens eines auszuführenden Werkstückbearbeitungsvorgangs (10₁, 10₂, 10₃) als Ergebnisvorschau im Livebild (14) des Werkstücks (6; 6');
c) manuelles Neupositionieren des auszuführenden Werkstückbearbeitungsvorgangs (10₁, 10₂, 10₃) im Livebild (14) des Werkstücks (6; 6'); und
d) Ausführen des Werkstückbearbeitungsvorgangs (10₁, 10₂, 10₃) am Werkstück (6; 6'),
**dadurch gekennzeichnet,**
**dass** der auszuführende Werkstückbearbeitungsvorgang (10₁, 10₂, 10₃) durch eine vorbestimmte Vorwärtstransformation (T; T') des Werkstückbearbeitungsvorgangs (10₁, 10₂, 10₃) von dem dreidimensionalen Maschinenkoordinatensystem (11) in das zweidimensionale Livebildkoordinatensystem (15) angezeigt wird, und
**dass** der Werkstückbearbeitungsvorgang (10₁, 10₂, 10₃) durch eine vorbestimmte Rücktransformation (T⁻¹; T'⁻¹) des neupositionierten Werkstückbearbeitungsvorgangs (10₁, 10₂, 10₃) vom zweidimensionalen Livebildkoordinatensystem (15) in das dreidimensionale Maschinenkoordinatensystem (11) ausgeführt wird.

2. Verfahren nach Anspruch 1, **dadurch gekennzeichnet, dass** vor dem Verfahrensschritt a) mit der Bilderfassungsvorrichtung (12) ein Referenz-Livebild (18) mit mindestens drei Maschinenbezugspunkten (P1-P4), deren dreidimensionale Lage im Maschinenkoordinatensystem (11) jeweils bekannt ist, erfasst wird und dass die Vorwärts- und Rückwärtstransformationen (T, T⁻¹) zwischen dem dreidimensionalen Maschinenkoordinatensystem (11) und dem zweidimensionalen Livebildkoordinatensystem (15) anhand der Maschinenbezugspunkte (P1-P4) und ihrer im Referenz-Livebild (18) zugehörigen Referenzbildpunkte (R1-R4) bestimmt werden.

3. Verfahren nach Anspruch 2, **dadurch gekennzeichnet, dass** mindestens ein vierter Maschinenbezugspunkt (P1-P4), dessen dreidimensionale Lage im Maschinenkoordinatensystem (11) bekannt ist, erfasst oder ein Verzerrungsfaktor, insbesondere zur Korrektur optischer Verzerrungen durch die Bilderfassungsvorrichtung (12), bestimmt wird, und dass die Vorwärts- und Rückwärtstransformationen (T, T⁻¹) zwischen dem dreidimensionalen Maschinenkoordinatensystem (11) und dem zweidimensionalen Livebildkoordinatensystem (15) anhand der mindestens vier Maschinenbezugspunkte (P1-P4) oder anhand der mindestens drei Maschinenbezugspunkte (P1-P4) und dem Verzerrungsfaktor, sowie anhand der im Referenz-Livebild (18) zugehörigen Referenzbildpunkte (R1-R4) bestimmt werden.

4. Verfahren nach Anspruch 2 oder 3, **dadurch gekennzeichnet, dass** zumindest einige, insbesondere alle, den Maschinenbezugspunkten (P1-P4) im Referenz-Livebild (18) entsprechenden Referenzbildpunkte (R1-R4) vom Bediener manuell zugeordnet werden.

5. Verfahren nach Anspruch 2 oder 3, **dadurch gekennzeichnet, dass** zumindest einige, insbesondere alle, den Maschinenbezugspunkten (P1-P4) im Referenz-Livebild (18) entsprechenden Referenzbildpunkte (R1-R4) durch eine automatische Bilderkennung (19) zugeordnet werden.

6. Verfahren nach einem der Ansprüche 2 bis 5, **dadurch gekennzeichnet, dass** zumindest einer der Maschinenbezugspunkte (P1-P4) durch eine verfahrbare Maschinenkomponente, insbesondere einen Laserbearbeitungskopf (3), gebildet wird, die vor dem Erfassen des mindestens einen Referenz-Livebildes (18) an eine im Maschinenkoordinatensystem (11) bekannte Lage verfahren wird.

7. Verfahren nach einem der vorhergehenden Ansprüche, **dadurch gekennzeichnet, dass** aus den für Werkstückbearbeitungsvorgänge an flachen Werkstücken (6) bekannten Vorwärts- und Rückwärtstransformationen (T; T⁻¹) die Vorwärts- und Rückwärtstransformationen (T', T'⁻¹) für Werkstückbearbeitungsvorgänge an einem dreidimensionalen Werkstück (6') wie folgt bestimmt werden:
(i) Anzeigen zumindest einer Teil-CAD-Darstellung (20) des dreidimensionalen Werkstücks (6') im Livebild (14) des Werkstücks (6') durch die für flache Werkstücke (6) bekannte Vorwärtstransformation (T) der CAD-Darstellung (20) von dem dreidimensionalen CAD-Koordinatensystem in das zweidimensionale Livebildkoordinatensystem (15), wobei die im Livebild (14) angezeigte CAD-Darstellung (20) abhängig von ihrer Position im Livebild (14) unterschiedlich skaliert ist; und
ii) Anpassen der für flache Werkstücke (6) bekannten Vorwärts- und Rückwärtstransformationen (T; T⁻¹) an das dreidimensionale Werkstück (6') durch Verschieben der positionsabhängigen CAD-Darstellung (20) des dreidimensionalen Werkstücks (6') im Livebild (14) des Werkstücks (6), bis im Livebild (14) die CAD-Darstellung (20) das Werkstück (6') zumindest teilweise, insbesondere vollständig, deckungsgleich überlagert.

8. Verfahren nach Anspruch 7, **dadurch gekennzeichnet, dass** die Teil-CAD-Darstellung (20) mindestens die Unterseite des Werkstücks (6') umfasst.

9. Verfahren nach Anspruch 7 oder 8, **dadurch gekennzeichnet, dass** im Livebild (14) des Werkstücks (6') eine vollständige CAD-Darstellung (20) des Werkstücks (6') angezeigt wird.

10. Verfahren nach einem der Ansprüche 7 bis 9, **dadurch gekennzeichnet, dass** die positionsabhängige CAD-Darstellung (20) des Werkstücks (6') manuell im Livebild (14) des Werkstücks (6') verschoben wird.

11. Bearbeitungsmaschine (1), insbesondere Werkzeug- oder Laserschneidmaschine, zur Bearbeitung von flachen oder dreidimensionalen Werkstücken (6; 6'), insbesondere Blechen,
mit mindestens einer ortsbekannten Bilderfassungsvorrichtung (12) eingerichtet zum zweidimensionalen Erfassen eines Livebildes (14) eines zu bearbeitenden Werkstücks (6; 6') aus einer dreidimensionalen Perspektive, mit einer Transformationseinheit (16) eingerichtet zum Vorwärts- und Rückwärtstransformieren (T, T⁻¹; T', T'⁻¹) zwischen dem dreidimensionalen Maschinenkoordinatensystem (11) und einem zweidimensionalen Livebildkoordinatensystem (15),
mit einer Anzeige (13a) eingerichtet zum Anzeigen eines aus der dreidimensionalen Perspektive erfassten Livebildes (14) des zu bearbeitenden Werkstücks (6; 6') und eingerichtet zum Anzeigen eines auszuführenden durch die Transformationseinheit (16) vorwärtstransformierten Werkstückbearbeitungsvorgangs (10₁, 10₂, 10₃) als Ergebnisvorschau aus der dreidimensionalen Perspektive im Livebild (14) des Werkstücks (6; 6'),
mit einer Bedieneinheit (13b) eingerichtet zum manuellen Neupositionieren des auszuführenden Werkstückbearbeitungsvorgangs (10₁, 10₂, 10₃) im Livebild (14) des Werkstücks (6; 6'), und
mit einer Maschinensteuerung (17), die programmiert ist, die Werkstückbearbeitung gemäß dem Verfahren nach einem der vorhergehenden Ansprüche zu steuern.

12. Bearbeitungsmaschine nach Anspruch 11, **gekennzeichnet durch** eine Bedieneinheit (13b) zum manuellen Verschieben einer CAD-Darstellung (20) des dreidimensionalen Werkstücks (6') im Livebild (14) des Werkstücks (6').

13. Computerprogrammprodukt, welches Codemittel aufweist, die zum Durchführen aller Schritte des Verfahrens nach einem der Ansprüche 1 bis 10 angepasst sind, wenn das Programm auf einer Maschinensteuerung (17) einer Bearbeitungsmaschine (1) abläuft.

## Claims

1. A method for machining flat workpieces (6), in particular metal sheets, or three-dimensional workpieces (6') on a processing machine (1), in particular a machine tool or laser cutting machine, with the following method steps:
a) capturing a live image (14) of a workpiece (6; 6') to be machined from a three-dimensional perspective with an image capturing device (12) for capturing two-dimensional images and displaying this captured live image;
b) displaying at least one workpiece machining operation (10₁, 10₂, 10₃) to be performed as a result preview in the live image (14) of the workpiece (6; 6');
c) manually repositioning the workpiece machining operation (10₁, 10₂, 10₃) to be performed in the live image (14) of the workpiece (6; 6'); and
d) performing the workpiece machining operation (10₁, 10₂, 10₃) on the workpiece (6; 6'),
**characterized in that**
the workpiece machining operation (10₁, 10₂, 10₃) to be performed is displayed by a predetermined forward transformation (T; T') of the workpiece machining operation (10₁, 10₂, 10₃) from the three-dimensional machine coordinate system (11) into the two-dimensional live-image coordinate system (15), and
the workpiece machining operation (10₁, 10₂, 10₃) is performed by a predetermined inverse transformation (T⁻¹, T'⁻¹) of the repositioned workpiece machining operation (10₁, 10₂, 10₃) from the two-dimensional live-image coordinate system (15) into the three-dimensional machine coordinate system (11).

2. The method as claimed in claim 1, **characterized in that**, before method step a), the image capturing device (12) is used to capture a reference live image (18) having at least three machine reference points (P1-P4), the three-dimensional position of which is in each case known in the machine coordinate system (11), and **in that** the forward and inverse transformations (T, T⁻¹) between the three-dimensional machine coordinate system (11) and the two-dimensional live-image coordinate system (15) are determined on the basis of the machine reference points (P1-P4) and their associated reference image points (R1-R4) in the reference live image (18).

3. The method as claimed in claim 2, **characterized in that** at least a fourth machine reference point (P1-P4), the three-dimensional position of which is known in the machine coordinate system (11), is captured or a distortion factor, in particular for the correction of optical distortions of the image capturing device (12), is determined, and **in that** the forward and inverse transformations (T, T⁻¹) between the three-dimensional machine coordinate system (11) and the two-dimensional live-image coordinate system (15) are determined on the basis of the at least four machine reference points (P1-P4) or on the basis of the at least three machine reference points (P1-P4) and the distortion factor, and also on the basis of the associated reference image points (R1-R4) in the reference live image (18).

4. The method as claimed in claim 2 or 3, **characterized in that** at least some, in particular all, of the reference image points (R1-R4) corresponding to the machine reference points (P1-P4) in the reference live image (18) are assigned manually by the operator.

5. The method as claimed in claim 2 or 3, **characterized in that** at least some, in particular all, of the reference image points (R1-R4) corresponding to the machine reference points (P1-P4) in the reference live image (18) are assigned by an automatic image recognition (19).

6. The method as claimed in one of claims 2 to 5, **characterized in that** at least one of the machine reference points (P1-P4) is formed by a movable machine component, in particular a laser machining head (3), that is moved to a position known in the machine coordinate system (11) before the capture of the at least one reference live image (18).

7. The method as claimed in one of the preceding claims, **characterized in that** the forward and inverse transformations (T', T'⁻¹) for workpiece machining operations on a three-dimensional workpiece (6') are determined as follows from the forward and inverse transformations (T; T⁻¹) known for workpiece machining operations on flat workpieces (6):
(i) displaying at least a part-CAD representation (20) of the three-dimensional workpiece (6') in the live image (14) of the workpiece (6') by the forward transformation (T) of the CAD representation (20) that is known for flat workpieces (6) from the three-dimensional CAD coordinate system into the two-dimensional live-image coordinate system (15), the CAD representation (20) that is displayed in the live image (14) being differently scaled according to its position in the live image (14); and
(ii) adapting the forward and inverse transformations (T; T⁻¹) known for flat workpieces to the three-dimensional workpiece (6') by displacing the position-dependent CAD representation (20) of the three-dimensional workpiece (6') in the live image (14) of the workpiece (6) until in the live image (14) the CAD representation (20) at least partially, in particular completely, congruently superposes the workpiece (6').

8. The method as claimed in claim 7, **characterized in that** the part-CAD representation (20) comprises at least the underside of the workpiece (6').

9. The method as claimed in claim 7 or 8, **characterized in that** a complete CAD representation (20) of the workpiece (6') is displayed in the live image (14) of the workpiece (6').

10. The method as claimed in one of claims 7 to 9, **characterized in that** the position-dependent CAD representation (20) of the workpiece (6') is displaced manually in the live image (14) of the workpiece (6').

11. A processing machine (1), in particular a machine tool or laser cutting machine, for machining flat or three-dimensional workpieces (6; 6'), in particular metal sheets, comprising:
at least one image capturing device (12) of a known location for the two-dimensional capture of a live image (14) of a workpiece (6; 6') to be machined from a a three-dimensional perspective,
a transformation unit (16) configured for forward and inverse transforming (T, T⁻¹; T', T'⁻¹) between the three-dimensional machine coordinate system (11) and a two-dimensional live-image coordinate system (15),
a display (13a) configured for displaying a live image (14), captured from the three-dimensional perspective, of the workpiece (6; 6') to be machined and configured for displaying a workpiece machining operation (10₁, 10₂, 10₃) to be performed which is transformed forward by the transformation unit (16), as a result preview from the three-dimensional perspective in the live image (14) of the workpiece (6; 6'),
an operator control unit (13b) configured for manual repositioning of the workpiece machining operation (10₁, 10₂, 10₃) to be performed in the live image (14) of the workpiece (6; 6'), and
a machine control (17), which is programmed to control the workpiece machining according to the method as claimed in one of the preceding claims.

12. The processing machine as claimed in claim 11, **characterized by** an operator control unit (13b) for manually displacing a CAD representation (20) of the three-dimensional workpiece (6') in the live image (14) of the workpiece (6').

13. A computer program product, which has coding means that are adapted for carrying out all of the steps of the method as claimed in one of claims 1 to 10 when the program runs on a machine control (17) of a processing machine (1).

## Revendications

1. Procédé d'usinage de pièces plates (6), en particulier de tôles, ou de pièces tridimensionnelles (6') sur une machine d'usinage (1), en particulier une machine-outil ou une machine de découpe au laser, comprenant les étapes de procédé suivantes :
a) acquisition d'une image en direct (14) d'une pièce à usiner (6 ; 6') depuis une perspective tridimensionnelle avec un dispositif d'acquisition d'image (12) permettant d'acquérir des images bidimensionnelles et d'afficher ladite image en direct acquise ;
b) afficher au moins une opération d'usinage de pièce (10₁, 10₂, 10₃) à réaliser sous forme de prévisualisation du résultat dans l'image en direct (14) de la pièce (6 ; 6') ;
c) repositionner manuellement l'opération d'usinage de pièce (10₁, 10₂, 10₃) à réaliser dans l'image en direct (14) de la pièce (6 ; 6') ; et
d) réaliser l'opération d'usinage de pièce (10₁, 10₂, 10₃) sur la pièce (6 ; 6') **caractérisé en ce**
**que** l'opération d'usinage de pièce (10₁, 10₂, 10₃) à réaliser est indiquée par une transformation directe prédéterminée (T ; T') de l'opération d'usinage de pièce (10₁, 10₂, 10₃) du système de coordonnées tridimensionnel de la machine (11) dans le système de coordonnées bidimensionnel de l'image en direct (15), et
**que** l'opération d'usinage de pièce (10₁, 10₂, 10₃) est réalisée par une transformation inverse prédéterminée (T⁻¹ ; T'⁻¹) de l'opération d'usinage de pièce (10₁, 10₂, 10₃) repositionnée du système de coordonnées bidimensionnel de l'image en direct (15) dans le système de coordonnées tridimensionnel de la machine (11).

2. Procédé selon la revendication 1, **caractérisé en ce qu'**avant l'étape de procédé a), une image en direct de référence (18) avec au moins trois points de référence machine (P1-P4), dont la position tridimensionnelle dans le système de coordonnées de la machine (11) est chaque fois connue, avec le dispositif d'acquisition d'image (12), et que les transformations directe et inverse (T, T⁻¹) entre le système de coordonnées tridimensionnel de la machine (11) et le système de coordonnées bidimensionnel de l'image en direct (15) sont déterminées à l'aide des points de référence machine (P1-P4) et de leurs points d'image de référence associés (R1-R4) dans l'image en direct de référence (18).

3. Procédé selon la revendication 2, **caractérisé en ce qu'**au moins un quatrième point de référence machine (P1-P4), dont la position tridimensionnelle dans le système de coordonnées de la machine (11) est connue, est acquis ou un facteur de distorsion, en particulier pour corriger des distorsions optiques créées par le dispositif d'acquisition d'image (12), est déterminé, et que les transformations directe et inverse (T, T⁻¹) entre le système de coordonnées tridimensionnel de la machine (11) et le système de coordonnées bidimensionnel de l'image en direct (15) sont déterminées à l'aide desdits au moins quatre points de référence machine (P1-P4) ou à l'aide desdits au moins trois points de référence machine (P1-P4) et du facteur de distorsion, ainsi qu'à l'aide des points d'image de référence (R1-R4) associés à l'image en direct de référence (18).

4. Procédé selon la revendication 2 ou 3, **caractérisé en ce qu'**au moins certains, en particulier tous les points d'image de référence (R1-R4) correspondant aux points de référence machine (P1-P4) dans l'image en direct de référence (18) sont associés manuellement par l'opérateur.

5. Procédé selon la revendication 2 ou 3, **caractérisé en ce qu'**au moins certains, en particulier tous les points d'image de référence (R1-R4) correspondant aux points de référence machine (P1-P4) dans l'image en direct de référence (18) sont associés par une reconnaissance automatique d'image (19).

6. Procédé selon l'une des revendications 2 à 5, **caractérisé en ce qu'**au moins un des points de référence machine (P1-P4) est formé par un composant mobile de la machine, en particulier une tête d'usinage au laser (3), qui est déplacé vers une position connue dans le système de coordonnées de la machine (11) avant l'acquisition de ladite au moins une image en direct de référence (18).

7. Procédé selon l'une des revendications précédentes, **caractérisé en ce que** les transformations directe et inverse (T', T'⁻¹) pour des opérations d'usinage de pièce sur une pièce tridimensionnelle (6') sont déterminées à partir des transformations directe et inverse (T ; T⁻¹) connues pour des opérations d'usinage de pièce sur des pièces plates (6) comme suit :
(i) affichage d'au moins une représentation CAO partielle (20) de la pièce tridimensionnelle (6') dans l'image en direct (14) de la pièce (6') par la transformation directe (T) connue pour des pièces plates (6) de la représentation CAO (20) du système de coordonnées CAO tridimensionnel dans le système de coordonnées bidimensionnel de l'image en direct (15), la représentation CAO (20) affichée dans l'image en direct (14) étant mise à l'échelle différemment en fonction de sa position dans l'image en direct (14) ; et
ii) adaptation des transformations directe et inverse (T ; T⁻¹) connues pour des pièces plates (6) à la pièce tridimensionnelle (6') par déplacement de la représentation CAO (20) de la pièce tridimensionnelle (6') dépendante de la position dans l'image en direct (14) de la pièce (6) jusqu'à ce que la représentation CAO (20) soit superposée à la pièce (6') en coïncidence au moins partielle, en particulier complète, dans l'image en direct (14).

8. Procédé selon la revendication 7, **caractérisé en ce que** la représentation CAO partielle (20) comprend au moins la face inférieure de la pièce (6').

9. Procédé selon la revendication 7 ou 8, **caractérisé en ce qu'**une représentation CAO complète (20) de la pièce (6') est affichée dans l'image en direct (14) de la pièce (6').

10. Procédé selon l'une des revendications 7 à 9, **caractérisé en ce que** la représentation CAO (20) dépendante de la position de la pièce (6') est déplacée manuellement dans l'image en direct (14) de la pièce (6').

11. Machine d'usinage (1), en particulier machine-outil ou machine de découpe au laser, pour l'usinage de pièces plates ou tridimensionnelles (6 ; 6'), en particulier de tôles,
avec au moins un dispositif d'acquisition d'image (12) de position connue, conçu pour l'acquisition bidimensionnelle d'une image en direct (14) d'une pièce à usiner (6 ; 6') depuis une perspective tridimensionnelle,
avec une unité de transformation (16) conçue pour la transformation directe et inverse (T, T⁻¹ ; T', T'⁻¹) entre le système de coordonnées tridimensionnel de la machine (11) et un système de coordonnées bidimensionnelle de l'image en direct (15),
avec un affichage (13a) conçu pour afficher une image en direct (14) acquise depuis la perspective tridimensionnelle de la pièce à usiner (6 ; 6') et conçu pour afficher une opération d'usinage de pièce (10₁, 10₂, 10₃) à réaliser, transformée de façon directe par l'unité de transformation (16), sous forme de prévisualisation du résultat depuis la perspective tridimensionnelle dans l'image en direct (14) de la pièce (6 ; 6'),
avec une unité de commande (13b) conçue pour repositionner manuellement l'opération d'usinage de pièce (10₁, 10₂, 10₃) à réaliser dans l'image en direct (14) de la pièce (6 ; 6'), et
avec une commande de machine (17) programmée pour commander l'usinage de pièce conformément au procédé selon l'une des revendications précédentes.

12. Machine d'usinage selon la revendication 11, **caractérisée par** une unité de commande (13b) permettant de déplacer manuellement une représentation CAO (20) de la pièce tridimensionnelle (6') dans l'image en direct (14) de la pièce (6').

13. Produit programme d'ordinateur qui présente des moyens de code adaptés à mettre en oeuvre toutes les étapes du procédé selon l'une des revendications 1 à 10 lorsque le programme est exécuté sur une commande de machine (17) d'une machine d'usinage (1).
